# EUROPÄISCHE PATENTANMELDUNG

(11) **EP 2 497 540 A1**
(43) Veröffentlichungstag der Anmeldung: **12.09.2012**
(21) Anmeldenummer: 12157326.5
(22) Anmeldetag: 28.02.2012
(51) Int. Cl.: A63C 5/00, A63C 13/00, A63C 5/04, B62B 13/00

(54) **Schneegleitvorrichtung**

(30) Priorität: 10.03.2011 AT 3352011
(71) Anmelder: Kump, Marcel, 8071 Hausmannstätten (AT)
(72) Erfinder: Kump, Marcel, 8071 Hausmannstätten (AT)
(74) Vertreter: Ellmeyer, Wolfgang

(57) **Zusammenfassung**

Schneegleitvorrichtung bestehend aus einem Steuerboard (1), auf welchem Steuerboard (1) sich bei Gebrauch ein Benutzer (6) zumindest mit Körperteilen befindet, einem Brustboard (2) und/oder gegebenenfalls Beinschalen (3) zum Gleiten auf einer Schneeoberfläche (25), wobei
das Steuerboard (1), auf welchem der Benutzer (6) eine liegende, kniende oder
stehende Position einnehmen kann, als ein biegesteifes, einteiliges Element mit einer im wesentlichen ebenen Steuerboardgleitfläche (5) ausgebildet ist,
welches Steuerboard (1) oder welche Steuerboardgleitfläche (5) sich in seiner Flächenerstreckung über die flächenmäßige Ausdehnung der auf dem Steuerboard (1) befindlichen Körperteile der auf der Schneegleitvorrichtung liegenden Person erstreckt,
welches Steuerboard (1) Abstützflächen in einem in Fahrtrichtung (8) gesehenen hinteren Bereich des Steuerboards (1) umfasst, auf welchen der Benutzer (6) bei kniender Position kniet oder bei liegender Position sich mit den Unterarmen abstützt.

## Beschreibung

Diese Erfindung betrifft eine Schneegleitvorrichtung bestehend aus einem Steuerboard, auf welchem Steuerboard sich bei Gebrauch ein Benutzer zumindest mit Körperteilen befindet, einem Brustboard und/oder gegebenenfalls Beinschalen zum Gleiten auf einer Schneeoberfläche.

Schneegleitvorrichtungen nach dem Stand der Technik sind beispielsweise aus US3689092 bekannt. Dieses Dokument beschreibt eine Schneegleitvorrichtung bestehend aus bei Gebrauch an den Beinen des Benutzers befestigten Beinschalen und kleinen Skiern, welche der Benutzer mittels seinen Händen führt.

Weiters sind aus US20030160442A1 und US4413832 im wesentlichen ähnliche Schneegleitvorrichtungen bekannt, welche aus bei Gebrauch mittels den Armen des Benutzers geführten Armschalen, einem Brustboard und Beinschalen besteht.

Die bekannten Schneegleitvorrichtungen bestehen in der Regel aus zwei Armschalen, mittels welcher in Kombination mit den Beinschalen unter höchster Kraftanstrengung der Benutzer den Kurs bei einer Talfahrt steuern kann. Die in US20030160442A1 und US4413832 offenbarten Schneegleitvorrichtungen weisen hierzu an den Beinschalen und Armschalen angebrachte Stege auf.

Die Dokumente US4571195 und US3079617 offenbaren im weiteren Sinn einteilige Schneegleitvorrichtungen. In US4571195 und US3079617 ist eine Kombination der einteiligen Schneegleitvorrichtung mit weiteren Schneegleitvorrichtung wie beispielsweise Brustboard oder Beinschale nicht offenbart.

AU534367 offenbart einen Schlitten, auf welchem der Benutzer sitzt.

Es ist weiters allgemein bekannt, mittels Luftmatrazen, Luftkissen oder Schlauchbooten, auf welche sich der Benutzer legt, einen Hang hinabzugleiten. Die Verwendung dieser Vorrichtung hat jedoch den Nachteil, dass der Benutzer die Fahrtrichtung und/oder die Geschwindigkeit der Vorrichtung nicht oder nur schlecht steuern kann.

Die hier diskutierte Erfindung stellt sich die Aufgabe, eine Schneegleitvorrichtung bereitzustellen, welche für einen Benutzer leicht steuerbar ist.

Erfindungsgemäß wird dies dadurch erreicht, dass das Steuerboard, auf welchem der Benutzer eine liegende, kniende oder stehende Position einnehmen kann, als ein biegesteifes, einteiliges Element mit einer im wesentlichen ebenen Steuerboardgleitfläche ausgebildet ist,
welches Steuerboard oder welche Steuerboardgleitfläche sich in seiner Flächenerstreckung über die flächenmäßige Ausdehnung der auf dem Steuerboard befindlichen Körperteile der auf der Schneegleitvorrichtung liegenden Person erstreckt,
welches Steuerboard Abstützflächen in einem in Fahrtrichtung gesehenen hinteren Bereich des Steuerboards umfasst, auf welchen der Benutzer bei kniender Position kniet oder bei liegender Position sich auf das Steuerboard, Brustboard und/oder die Beinschalen stützend mit den Unterarmen abstützt.

Das Steuerboard ist mit einem Brustboard, welches eine an die Form der Brust des Benutzers angepasste Form mit einer von der Oberfläche der Brust beabstandete, im wesentlichen ebene, zur Brustoberfläche tangential verlaufende Brustboardgleitfläche aufweist, und/oder mit Beinschalen, welche eine an die Form des Beines des Benutzers angepasste Form mit einer von der Beinoberfläche beabstandete, im wesentlichen ebene, zu der Beinoberfläche tangential verlaufende erste Beinschalengleitfläche aufweisen, kombinierbar.

Die biegesteife, scheiben- oder plattenförmige Ausbildung des Steuerboards erlaubt das Steuern der Fahrtrichtung und/oder der Geschwindigkeit der erfindungsgemäßen Schneegleitvorrichtung durch den Benutzer. Der Benutzer kann hierzu eine Gewichtsverlagerung, eine Veränderung der Stellung des Steuerboards zu der Schneeoberfläche vornehmen.

Das Steuerboard, das Brustboard und die Beinschalen werden bevorzugt in Sandwichbauweise nach dem Stand der Technik hergestellt. Der Kern besteht in der Hauptsache aus einem geschäumten oder schäumbaren Material, um so das Gewicht dieser Teile der Gleitvorrichtung gering zu halten. Die Oberflächen dieser Teile können beispielsweise aus Epoxid-Harz hergestellt sein.

In einer ersten Gebrauchsform der erfindungsgemäßen Gleitvorrichtung gleitet der Benutzer in einer am Bauch liegenden Position mit Kopf in Fahrtrichtung eine geneigte Schneefläche hinab. Der Benutzer beziehungsweise die Gleitvorrichtung erfährt aufgrund der Schwerkraft eine Beschleunigung.

Die erfindungsgemäße Gleitvorrichtung ist vorzugsweise so ausgeformt, dass der Benutzer auch aus eigener Kraft die Gleitvorrichtung beschleunigen kann. Die Teile der Gleitvorrichtung, insbesondere das Brustboard und die Beinschalen sind so ausgeformt und an den jeweiligen Körperteilen des Benutzers so befestigt, dass die Bewegungsfreiheit des Benutzers, insbesondere die Bewegungsfreiheit der Beine und Arme möglichst nicht eingeschränkt ist. Das Steuerboard kann so ausgeformt sein, dass der Benutzer darauf leicht eine liegende, kniende oder stehende Position einnehmen kann. Vorzugsweise weisen die Auflageflächen des Steuerboardes zum Aufliegen des Unterarms, des Knies oder des Fußes eine an den jeweiligen Körperteil angepasst Form auf, um dem Benutzer bei Gebrauch der Schneegleitvorrichtung eine Gewichtsverlagerung ohne etwaiges Abrutschen zu erlauben.

Das Steuerboard bietet gegebenenfalls in Kombination mit dem Brustboard und/oder den Beinschalen aufgrund der Ausdehnung der Steuerboardgleitfläche eine bequem einzunehmende Position, auch wenn der Benutzer stoßartig eine Position auf dem Steuerboard einnimmt.

Vorzugsweise ist das Steuerboard mit Brustboard und mit Beinschalen kombiniert, um so die Möglichkeit der Auflage der betreffenden Körperteile auf der Schneeoberfläche unter Wahrung größt möglicher Bewegungsfreiheit für den Benutzer bieten zu können.

In Abhängigkeit einer erfindungsgemäßen Kombination des Steuerboards mit einem Brustboard und/oder Beinschalen stützt sich der liegende Benutzer mit den in Fahrtrichtung gesehen vorderen Körperteilen wie beispielsweise Arme am Steuerbord in den vorgesehenen Abstützbereichen im in Fahrtrichtung hinteren Bereich des Steuerboards ab.

Die Gleitflächen des Brustboards und die Gleitflächen der Beinschalen sind von der Oberfläche der Brust beziehungsweise des Beins so beabstandet, dass der Benutzer nicht durch auf der Schneeoberfläche liegende niedrige Gegenstände wie Steine verletzt werden kann.

Das Brustboard und die Beinschalen werden mittels Gurten an den betreffenden Körperteilen des Benutzers fixiert. Vorzugsweise weisen die Gurten dämpfende Elemente auf.

Die Steuerboardgleitfläche kann im wesentlichen die Form eines Dreieckes aufweisen, wobei eine erste Ecke in Bezugnahme auf den Steuerboardmittelpunkt der dreiecksförmigen Steuerboardgleitfläche in Fahrtrichtung der Schneegleitvorrichtung, zweite Ecken in Bezug auf den Steuerboardmittelpunkt der dreiecksförmigen Steuerboardgleitfläche entgegen der Fahrtrichtung orientiert sind.

Die Ecken des Dreieckes können abgerundet sein; die Kanten des Dreieckes können Krümmungen aufweisen.

Das Steuerboard kann vorzugsweise zwei Haltevorrichtungen umfassen, mit welchen der Benutzer das Steuerboard mit jeweils einer Hand hält, während der liegende Benützer seinen Unterarm oder der kniende Benutzer sein Knie in den Abstützbereich legt.

In der ersten Gebrauchsform der erfindungsgemäßen Gleitvorrichtung legt der Benutzer den Unterarm in den Abstützungsbereich und hält mit Hilfe der Haltevorrichtung das Steuerboard. Bei dieser Gebrauchsform können auf das Brustboard und/oder die Beinschalen in Kombination mit dem Steuerboard verwendet werden.

In der zweiten Gebrauchsform der erfindungsgemäßen Gleitvorrichtung kniet der Benutzer auf dem Steuerbord, wobei die Knie in den Aufstützbereich gesetzt werden. Bei der zweiten Gebrauchsform finden das Brustboard und die Beinschalen keine Anwendung.

Es kann jeweils eine Haltevorrichtung seitlich einer Steuerboardmittelachse, welche als eine Achse verlaufend durch den Steuerboardmittelpunkt parallel zur Fahrtrichtung orientiert ist, und benachbart zu dem Steuerboardmittelpunkt und/oder jeweils ein Abstützbereich seitlich der Steuerboardmittelachse, vorzugsweise benachbart zu den zweiten Ecken am Steuerboard angeordnet sein.

Die Position der Haltevorrichtung und des Abstützbereiches sind so zu wählen, dass mittels einer durch die Hände und die abgestützten Unterarme eine Drehbewegung des Steuerboards um vorzugsweise den Steuerboardmittelpunkt durch den Benützer durchführbar ist.

Die Haltevorrichtung besteht aus vorzugsweise einklappbaren Griffen. Die Griffe können so ausgeführt sein, dass diese im Falle des Lösens der jeweiligen Hand selbständig einklappen, um so eine Verletzung des Benutzers im Falles eines Sturzes zu vermeiden. Ein selbständiges Einklappen der Griffe kann weiters mit einem Ziehen des Benutzers an einer Sicherheitsleine gekoppelt sein.

Der Abstützbereich umfasst eine vorzugsweise an die Form des Unterarms angepasste Fläche, welche in Bezug auf die Steuerboardgleitfläche geneigt sein kann. Durch die Neigung des Abstützbereiches und des Abstandes des Abstützbereiches zu der Haltevorrichtung sowie die Position der Haltevorrichtung und des Abstützbereiches ist der Belastungsschwerpunkt der durch die Belastung des Steuerboards in Form des Abstützens des Benutzers auf diesem einstellbar. Vorzugsweise liegt der Belastungsschwerpunkt im in Fahrtrichtung gesehen im hinteren Drittelbereich des Steuerboards.

Das Steuerboard kann im Bereich der ersten Ecke eine Schaufelform aufweisen. Die Form der Schaufel ist beispielsweise durch das Sichtfeld des Benutzers vorgegeben. Das Steuerboard kann im Bereich der Schaufel durchsichtig ausgeführt sein, sodass die Schaufel als Sichtschutz für den Benutzer wirkt.

Das Steuerboard kann im Bereich der zweiten Ecken Bremsflächenelemente aufweisen, welche Bremsflächenelemente bei Anheben des Steuerboards im Bereich der ersten Ecke bei Drehung des Steuerboards um eine rechtwinklig zur Fahrtrichtung verlaufende erste Drehachse in die Schneeoberfläche gepresst werden, auf welchem die Schneegleitvorrichtung gleitet, wodurch die Schneegleitvorrichtung abgebremst wird.

Die Bremsflächenelemente sind in einem definierten Winkel zu der Steuerboardgleitfläche im Bereich der zweiten Ecken orientiert, sodass die Bremsflächenelement nur bei ausreichenden Anheben des Steuerboards den Schneeoberfläche kontaktieren. Es kann jeweils ein Bremsflächenelement im Bereich der zweiten Ecken einstückig mit dem Steuerboard ausgebildet sein.

Der Erfindung schließt nicht aus, dass das Bremsflächenelement sich über die gesamte der sich zwischen den zweiten Ecken erstreckenden Kante oder in Teilbreichen dieser erstreckt.

Die erste Drehachse kann auch als eine die zweiten Ecken durchlaufende gedachte Linie definiert sein.

Das Steuerboard kann eine zweiteilige Steuerboardgleitfläche aufweisen, welche Steuerboardgleitflächen seitlich der Steuerboardmittelachse, sich vorzugsweise unterhalb der Abstützbereiche erstreckend mit gegenenfalls in Fahrtrichtung orientierten Rillen angeordnet sind.

Die im der Steuerboardgleitfläche angeordneten Rillen dienen der Stabilisierung der Fahrt des Steuerboards in eine vorgegebene Richtung, vorzugsweise in Fahrtrichtung.

Die die Rillen ausbildenden Erhebungen im Bereich der Steuerboardgleitfläche können aus einen harten Material wie beispielsweise Stahl und in Form von spitzen Kanten ausgebildet sein. Bei mehreren zwischen den Rillen ausgebildeten Erhebungen können einige der Erhebung höher als die anderen Erhebungen ausgebildet sein, um eine exakte Steuerung des Steuerboardes auf einer hart verpressten Schneeoberfläche, insbesondere Kunstschneeoberfläche oder einer Eisoberfläche zu erlauben.

In hierzu analoger Weise können das Brustboard oder die Beinschienen ebenso Rillen gemäß obiger Beschreibung umfassen.

Das Steuerbord kann zumindest einen Fußstellbereich gegebenenfalls in Kombination einer Fußfeststellvorrichtung umfassen, in welchen Fußstellbereich ein auf dem Steuerboard stehender Benutzer seinen Fuß stellen kann.

Der dritte Gebrauchsfall der erfindungsgemäßen Schneegleitvorrichtung betrifft das Gleiten mit einem Benutzer in Stehposition des Benutzers, insbesondere eine Liftfahrt. Der Benutzer positioniert hierzu zumindest einen Fuß in den vorgesehenen Fußstellbereich. Der Fuß ist vorzugsweise mit der Fußfeststellvorrichtung am Steuerboard befestigt, wobei Bindungen, Schlaufen oder dergleichen nach dem Stand der Technik zum Einsatz kommen.

Der Fußstellbereich ist vorzugsweise in einem Bereich nahe des Steuerboardmittelpunktes angeordnet, sodass das Steuerboard durch den Fuss lenkbar ist. Der Fußstellbereich kann eine Schlaufe umfassen, durch welche ein Abrutschen des Fußes aus dem Fußstellbereich unterbindbar ist.

Das Brustboard und die Beinschalen kommen beim dritten Gebrauchsfall nicht zur Anwendung.

Das Brustboard weist vorzugsweise eine zweitteilige Brustboardgleitfläche mit gegebenenfalls in Fahrrichtung orientierten Rillen umfasst.

Die zweiteilige Brustboardgleitfläche zeichnet sich durch eine Anordnung der Brustboardgleitflächen im Randbereich der Brust des Benutzers aus, damit ein Rollen des Körpers des Benutzers während der Gleitfahrt oder im Stillstand verhindert wird.

Eine Beinschale kann eine zweite Beinschalengleitfläche mit gegebenenfalls schräg zur Fahrtrichtung orientierten oder in Bogenform zur Fahrtrichtung verlaufenden Rillen aufweisen, welche zweite Beinschalengleitflächen im einem Bereich zwischen der Steuerboardmittelachse und der ersten Beinschalengleitflächen angeordnet sind.

Die zweiten Beinschalengleitfläche ist so positioniert, dass diese durch ein Anwinklen des Bein mit der Schneeoberfläche in Kontakt gebracht werden kann.

Die Schneegleitvorrichtung ist durch ein Drehen des Steuerboards um eine zur Steuerboardgleitfläche rechtwinklig orientierte zweite Drehachse und durch gegebenenfalls Anlegen einer der zweiten Beinschalengleitflächen der Beinschale an die Schneeoberfläche in eine Kurvenfahrt lenkbar, welche Beischale an dem kurvenäußeren Bein angebracht ist.

Im Unterschied zu den Gleitvorrichtungen nach dem Stand der Technik wird eine Kurvenfahrt nicht durch ein Abbremsen der Gleitvorrichtung in einem Teilbereich, welcher kurveninnenseitig liegt, sondern durch das gezielte Aktivieren von Gleitflächen ― beispielsweise durch Gewichtsverlagerung des Benutzers ― bewirkt. Die für die Steuerung der Gleitvorrichtung aktivierbaren Gleitflächen können Rillen aufweisen, durch welche die Lenkwirkung dieser Gleitflächen verstärkt wird.

Die Schneegleitvorrichtung ist durch Einpressen der zweiten Beinschalengleitflächen in die Schneeoberfläche bremsbar.
Figur 1 zeigt eine dreidimensionale Ansicht einer Ausführungsform des Steuerboards 1 als Teil der erfindungsgemäßen Gleitvorrichtung.
Figur 2 zeigt eine Ansicht des in Figur 1 dargestellten Steuerboards von hinten.
Figur 3 zeigt eine dreidimensionale Ansicht eine Ausführungsform des Brustboards.
Figur 4 und Figur 5 zeigen Ansichten der Beinschalen.
Figur 6 und Figur 7 zeigen Ansichten der erfindungsgemäßen Gleitvorrichtung samt Benutzer.
Figur 8 zeigt eine Ansicht einer weiteren Ausführungsform des Steuerboards von hinten.

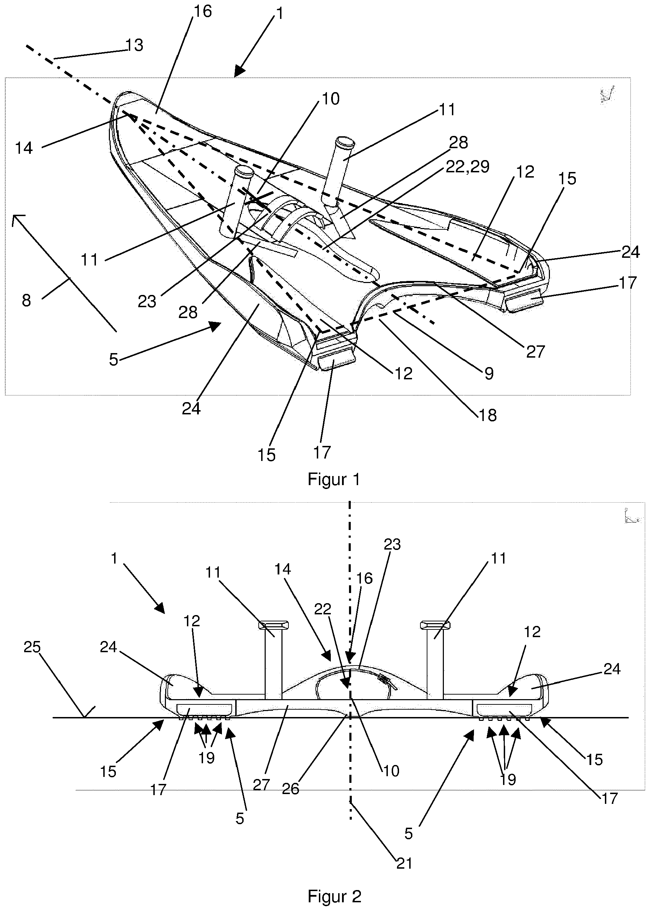

In den Figuren 1-8 sind die folgenden Elemente der erfindungsgemäßen Schneegleitvorrichtung durch folgende Bezugszeichen gekennzeichnet.
- 1: Steuerboard
- 2: Brustboard
- 3: Beinschalen
- 4: Brustboardgleitfläche
- 5: Steuerboardgleitfläche
- 6: Benutzer
- 7: erste Beinschalengleitfläche
- 8: Fahrtrichtung
- 9: Dreieck
- 10: Steuerboardmittelpunkt
- 11: Haltevorrichtung
- 12: Abstützbereiche
- 13: Steuerboardmittelachse
- 14: erste Ecke
- 15: zweite Ecke
- 16: Schaufelform
- 17: Bremsflächenelemente
- 18: erste Drehachse
- 19: Rille
- 20: zweite Beinschalengleitfläche
- 21: zweite Drehachse
- 22: Fußstellbereich
- 23: Fußfeststellvorrichtung
- 24: Seitenwand
- 25: Schneeoberfläche
- 26: Steg
- 27: (zwischen zweiten Ecken sich erstreckende) Kante
- 28: Versenkungen
- 29: Vertiefung
- 30: Schulterbereich
- 31: Gute
- 35: Bein
Figur 1 zeigt eine dreidimensionale Ansicht von oben einer Ausführungsform des Steuerboards 1 als Teil der erfindungsgemäßen Gleitvorrichtung von schräg hinten, welches Steuerboard 1 als ein biegesteifes Element mit einer im wesentlichen ebenen Steuerboardgleitfläche 5 (nicht sichtbar) ausgebildet ist, welches Steuerboard 1 oder welche Steuerboardgleitfläche 5 sich in seiner Flächenerstreckung über die flächenmäßige Ausdehnung der auf dem Steuerboard 1 befindlichen Körperteile (nicht dargestellt) erstreckt. Die an der Unterseite des Steuerboards 1 befindliche Steuerboardgleitfläche 5 weist im wesentlichen die Form eines Dreieckes 9 auf, dessen erste Ecke 14 in Bezugnahme auf die Fahrtrichtung 8 vor dem Steuerboardmittelpunkt 10 der dreiecksförmigen Steuerboardgleitfläche 5 angeordnet ist. Die zweiten Ecken 15 sind in Bezug auf die Fahrtrichtung 8 hinter dem Steuerboardmittelpunkt 10 angeordnet. Das Steuerboard 1 umfasst weiters zwei als Haltevorrichtung 11 dienende Haltegriffe, welche an der Oberseite des Steuerboards 1 im Bereich des Steuermittelpunktes 10 und seitlich zu einer Steuerboardmittelachse 13 angeordnet sind. Die Haltegriffe sind in Versenkungen 28 durch Umklappen einbringbar.

Zwei Abstützbereiche 12 sind jeweils im Bereich der zweiten Ecken 15 angeordnet.

Das Steuerboard 1 ist in seiner ersten Ecke 14 zu einer Schaufelform 16 geformt. An den zweiten Ecken 15 sind Bremsflächenelemente 17 ausgeformt, welche bei Anheben der ersten Ecke 14 und Drehen des Steuerboards 1 um eine erste Drehachse 18 in Kontakt mit der Schneeoberfläche 25 (in Figur 1 nicht dargestellt) kommen.

Benachbart zu dem Steuerboardmittelpunkt 10 und auf der Steuerboardmittelachse 13 ist der Fußstellbereich 22 angeordnet. Schlaufen dienen als Fußfeststellvorrichtung 23, mittels welcher der Fuß des Benutzers 6 an dem Steuerboard 1 eingehängt befestigt werden kann. Die Fußstellvorrichtung weist eine Vertiefung 29 mit einer an den Fuß beziehungsweise Schuh des Benutzers 6 angepassten Form auf.

Das Steuerboard 1 weist an der sich zwischen den zweiten Ecken 15 erstreckenden Kante 27 eine Krümmung auf, welche Krümmung an die Form des Brustboards 2 abgepasst ist.

Figur 2 zeigt eine Ansicht des Steuerboards 1 von hinten. Die zweiteilige Steuerboardgleitfläche 5 samt Rillen 19 ist jeweils in einem Bereich unterhalb der Abstützbereiche 12 angeordnet. Die Abstützbereiche 12 sind nach außen mit einer Seitenwand 24 begrenzt, um ein Abrutschen der in den Abstützbereich 12 gelegten Körperteile von dem Steuerboard 1 zu verhindern.

Ebenfalls im Bereich der Abstützbereiche 12 sind die jeweiligen Bremsflächenelemente 17 vorgesehen, welche bei keiner Anhebung der ersten Ecke 14 nicht die Schneeoberfläche 25 kontaktieren.

Die Haltegriffe sind in einem Bereich innerhalb der Abstützbereiche 12 angeordnet. In einem Bereich innerhalb der Haltegriffe befindet sich weiters der Fußstellbereich 22 samt Fußfeststellvorrichtung 23 und Vertiefung 29 (in Figur 2 nicht dargestellt).

An der Unterseite des Steuerboards 1 ist ein Steg 26 angeordnet, welcher parallel zu der Steuerboardmittelachse 13 (in Figur 2 nicht dargestellt) verläuft.

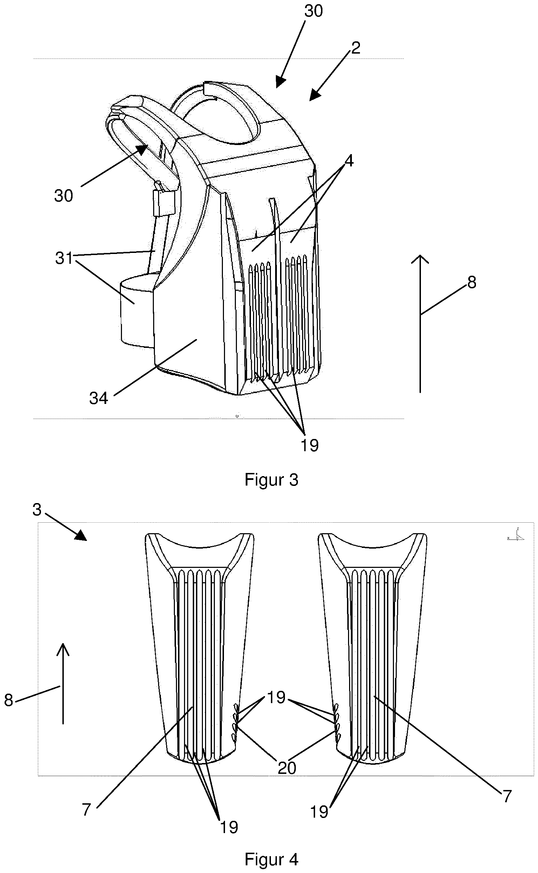

Figur 3 zeigt eine dreidimensionale Darstellung des Brustboards 2 mit einer zweigeteilten Brustboardgleitfläche 4 samt Rillen 19. Die Brustboardgleitflächen 4 sind im Seitenbereich des Brustboards 2 angeordnet und bilden eine im wesentlichen ebene, tangential zur Oberfläche der Brust des Benutzers 6 verlaufende Gleitfläche. Die Brustboardgleitfläche 4 ist bis in den Schulterbereich 30 fortlaufend geführt, um so bestmöglichen Schutz für den Benutzer 6 zu gewährleisten. Ebenso reichen die Seitenflächen 34 bis in den seitlichen Brustbereich.

Mittels Gurten 31 wird das Brustboard 2 am Benutzer 6 befestigt. Teile des im Schulterbereich 30 befindlichen Brustboards 2 sind aus einem elastischen, dampfenden Material ausgebildet.

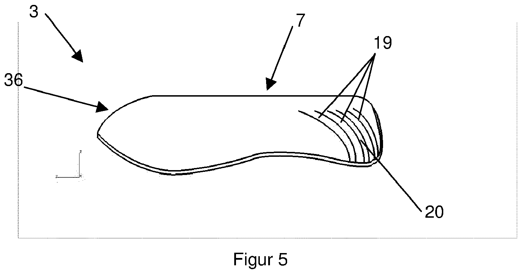

Figur 4 und Figur 5 zeigen Ansichten der Beinschalen 3 mit einer sich über die Beinschalen 3 erstreckenden ersten Beinschalengleitfläche 7 samt parallel zur Fahrtrichtung 8 angeordneten Rillen 19. Figur 4 zeigt eine Ansicht auf die Beinschalen 3 mit Blickrichtung im wesentlichen rechtwinklig auf die ersten Beinschalengleitflächen 7; Figur 5 zeigt eine dazugehörige Seitenansicht. Die ersten Beinschalengeleitflächen 7 erstrecken sich als von der Oberfläche des Beines tangential beabstandet in einer Ebene. Aufgrund der Beabstandung der ersten Beinschalengleitfläche 7 ist vom Bein 35 des Benutzers 6 (nicht dargestellt) ist die Ausformung einer Schrägfläche 36 der Beinschalen 3 erforderlilch.

An der Innenseite der Beinschalen 3 sind zweite Beinschalengleitflächen 20 vorgesehen, welche bei Anwinkelung des Beines 35 (nicht dargestellt) mit der Schneeoberfläche 25 (in Figur 4 nicht dargestellt) in Kontakt kommen. Die Rillen 19 der zweiten Beinschalengleitfläche 20 verlaufen in Bogenform, wobei die Bogenform durch die gekrümmte Form der zweiten Beinschalengleitflächen 20 derart vorgegeben ist, nämlich dass die Fahrrichtung 8 zu den Rillen 19 der zweiten Beinschalengleitflächen 20 in jedem Teilbereich tangential steht.

Die Beinschalen 3 umfassen Gurte (nicht dargestellt), mittels welchen die Beinschalen 3 am Bein 35 des Benutzers 6 befestigt werden.

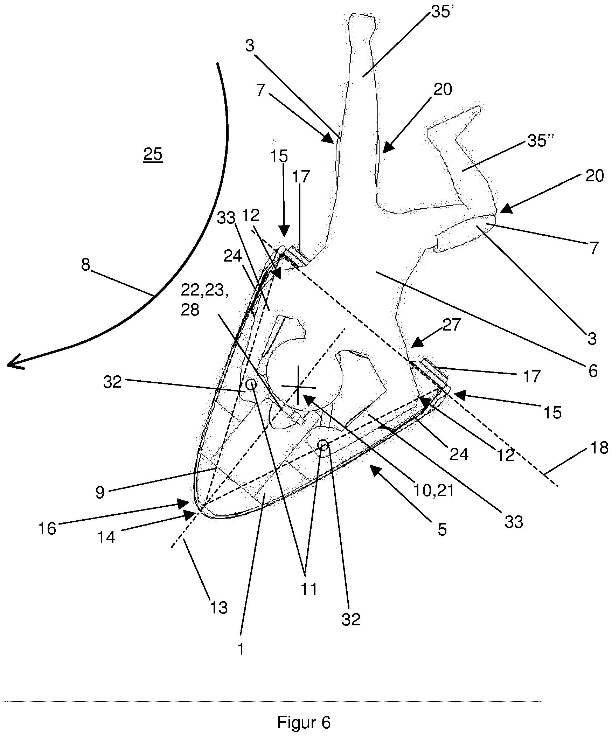

Figur 6 zeigt eine Ansicht von oben der erfindungsgemäßen Gleitvorrichtung samt Benutzer 6 bei Kurvenfahrt. Der Benutzer 6 hält mit seinen Händen 32 mit Hilfe der Haltevorrichtung 11 das Steuerboard 1. Mit seinen Unterarmen 33 stützt sich der Benutzer 6 im Abstützbereich 12 ab. Der Benutzer 6 trägt weiters das Brustboard 2 (in Figur 5 nicht ersichtlich) und die Beinschalen 3.

Die Fahrtrichtung 8 ist mittels Pfeil angegeben. Um eine Kurvenfahrt nach links zu erreichen dreht der Benutzer 6 das Steuerboard 1 um den Steuerboardmittelpunkt 10 beziehungsweise um die erste Drehachse 18 und winkelt ein das kurvenäußere Bein 35" an, wodurch die zweiten Beinschalengleitflächen 20 (in Figur 5 nicht ersichtlich) der Beinschale 3, welche am Bein 35" befestigt ist, in Kontakt mit der Schneeoberfläche 25 kommt. Die erste Beinschalenoberfläche 7 der Beinschale 3, welche am Bein 35" befestigt ist, ist in keinem Kontakt mit der Schneeoberfläche 25. Das kurveninnere Bein 35' ist gestreckt, wodurch die jeweilige erste Beinschalengleitfläche 7 in Kontakt, jedoch die zweite Beinschalengleitfläche 20 nicht in Kontakt mit der Schneeoberfläche 25 sind.

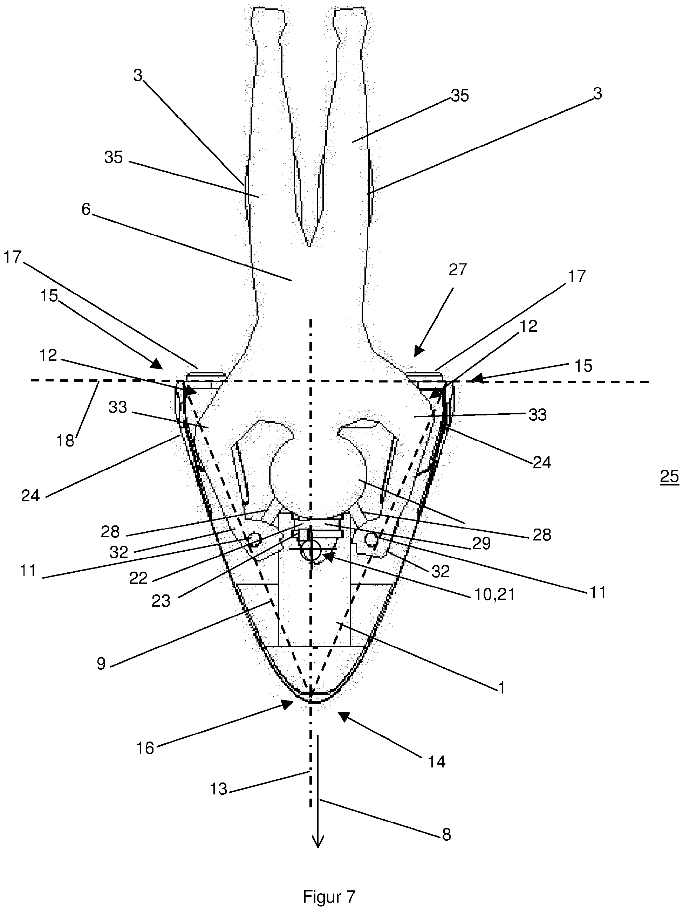

Figur 7 zeigt eine Ansicht von oben der erfindungsgemäßen Gleitvorrichtung samt Benutzer 6 bei Geradeausfahrt.

Die Fahrtrichtung 8 ist mittels Pfeil angegeben. Um eine Geradeausfahrt zu erreichen stellt der Benutzer 6 das Steuerboard 1 in Fahrtrichtung 8 und streckt beide Beine 35 aus, wodurch die zweite Beinschalengleitflächen 20 der Beinschalen 3 nicht in Kontakt mit der Schneeoberfläche 25 sind. Die ersten Beinschalenoberflächen 7 der Beinschalen 3 sind in einem Kontakt mit der Schneeoberfläche 25.

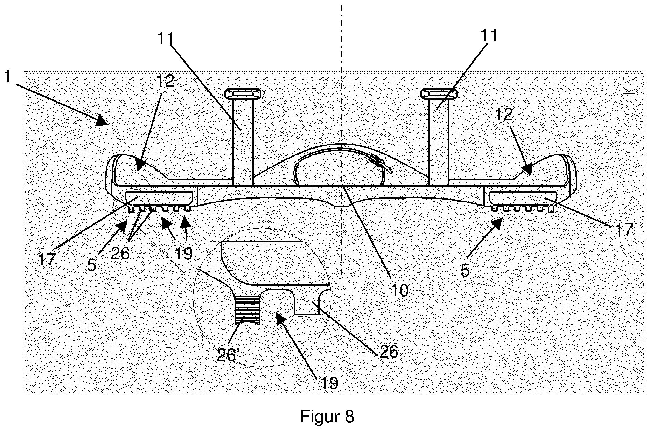

Figur 8 zeigt eine Ansicht einer weiteren Ausführungsform des Steuerboards 1 von hinten. Die in Figur 8 gezeigte Ausführungsform ist mit dem erfindungsgemäßen Brustboard 2 und den erfindungsgemäßen Beinschalen 3 kombinierbar. In Figur 8 sind im Wesentlichen diejenigen Elemente des erfindungsgemäßen Steuerboards 1 zu finden, welche auch in Figur 2 dargestellt sind. Aus Gründen der Vereinfachung sind nicht alle Elemente mit Bezugszeichen versehen.

Ähnlich wie die in Figur 2 dargestellte Ausführungsform des erfindungsgemäßen Steuerbordes 1 umfasst das Steuerboard 1 ausgebildete Stege 26 und zwischen den Stegen 26 ausgebildete Rillen 19. Der von der Steuerboardachse 13 am weitesten beabstandete Steg 26' höher als die benachbarten Stege 26 ausgebildet. Während die Stege 26 aus dem gleichen Werkstoff wie das übrige Steuerboard 1 hergestellt sind, ist der Steg 26' aus Stahl oder einem Werkstoff mit ähnlichen Eigenschaften ausgebildet.

## Patentansprüche

1. Schneegleitvorrichtung bestehend aus einem Steuerboard (1), auf welchem Steuerboard (1) sich bei Gebrauch ein Benutzer (6) zumindest mit Körperteilen befindet, einem Brustboard (2) und/oder gegebenenfalls Beinschalen (3) zum Gleiten auf einer Schneeoberfläche (25), **dadurch gekennzeichnet, dass** das Steuerboard (1), auf welchem der Benutzer (6) eine liegende, kniende oder stehende Position einnehmen kann, als ein biegesteifes, einteiliges Element mit einer im wesentlichen ebenen Steuerboardgleitfläche (5) ausgebildet ist,
welches Steuerboard (1) oder welche Steuerboardgleitfläche (5) sich in seiner Flächenerstreckung über die flächenmäßige Ausdehnung der auf dem Steuerboard (1) befindlichen Körperteile der auf der Schneegleitvorrichtung liegenden Person hinaus erstreckt,
welches Steuerboard (1) Abstützflächen in einem in Fahrtrichtung (8) gesehenen hinteren Bereich des Steuerboards (1) umfasst, auf welchen der Benutzer (6) bei kniender Position kniet oder bei liegender Position sich auf das Steuerboard (1), Brustboard (2) und/oder die Beinschalen (3) stützend mit den Unterarmen abstützt.

2. Schneegleitvorrichtung nach Anspruch 1, **dadurch gekennzeichnet, dass** die Steuerboardgleitfläche (5) im wesentlichen die Form eines Dreieckes (9) aufweist, wobei eine erste Ecke (14) in Bezug auf den Steuerboardmittelpunkt (10) der dreiecksförmigen Steuerboardgleitfläche (5) in Fahrtrichtung (8) der Schneegleitvorrichtung, zweite Ecken (15) in Bezug auf den Steuerboardmittelpunkt (10) der dreiecksförmigen Steuerboardgleitfläche (5) entgegen der Fahrtrichtung (8) angeordnet sind, wobei das Steuerboard (1) im Bereich der ersten Ecke (14) eine Schaufelform (16) aufweist und die Abstützbereiche (12) im Bereich der zweiten Ecken (15) angeordnet sind.

3. Schneegleitvorrichtung nach einem der Ansprüche 1 bis 2, **dadurch gekennzeichnet, dass** das Steuerboard (1) zumindest eine Haltevorrichtung (11), mit welcher Haltevorrichtung (11) ein Benutzer (6) bei liegender Position das Steuerboard (1) mit vorzugsweise einer Hand hält, während der Benützer (6) bei liegender Position seinem Unterarm oder bei kniender Position sein Knie in den Abstützbereich (12) legt.

4. Schneegleitvorrichtung nach Anspruch 3, **dadurch gekennzeichnet, dass** jeweils eine Haltevorrichtung (11) seitlich einer Steuerboardmittelachse (13), welche Steuerboardmittelachse (13) als eine Achse verlaufend durch den Steuerboardmittelpunkt (10) parallel zu der Fahrtrichtung (8) orientiert ist, und benachbart zu dem Steuerboardmittelpunkt (10) angeordnet ist.

5. Schneegleitvorrichtung nach einem der Ansprüche 1 bis 4, **dadurch gekennzeichnet, dass** das Steuerboard (1) im Bereich der zweiten Ecke (15) Bremsflächenelemente (17) aufweist, welche Bremsflächenelemente (17) bei Anheben des Steuerboards (1) im Bereich der ersten Ecke (14) bei Drehung des Steuerboards (1) um eine rechtwinklig zur Fahrtrichtung (8) verlaufende erste Drehachse (18) in die Schneeoberfläche (25) gepresst werden, auf welcher die Schneegleitvorrichtung gleitet, wodurch die Schneegleitvorrichtung abgebremst wird.

6. Schneegleitvorrichtung nach einem der Ansprüche 1 bis 5, **dadurch gekennzeichnet, dass** das Steuerboard (1) eine zweiteilige Steuerboardgleitfläche (5) aufweist, welche Steuerboardgleitflächen (5) seitlich der Steuerboardmittelachse (13), vorzugsweise unterhalb der Abstützbereiche (12) mit gegenenfalls in Fahrtrichtung (8) orientierten Rillen (19) angeordnet sind.

7. Schneegleitvorrichtung nach einem der Ansprüche 1 bis 6, **dadurch gekennzeichnet, dass** das Brustboard (2) eine an die Form der Brust des Benutzers (6) angepasste Form mit einer von der Oberfläche der Brust beabstandete, im wesentlichen ebene, zur Brustoberfläche tangential verlaufende, gegebenenfalls zweiteilge Brustboardgleitfläche (4) mit gegebenenfalls in Fahrrichtung (8) orientierten Rillen (19) aufweist.

8. Schneegleitvorrichtung nach einem der Ansprüche 1 bis 7, **dadurch gekennzeichnet, dass** die Beinschalen (3) eine an die Form des Beines des Benutzers (6) angepasste Form mit einer von der Beinoberfläche beabstandete, im wesentlichen ebene, zu der Beinoberfläche tangential verlaufende erste Beinschalengleitfläche (7) aufweisen.

9. Schneegleitvorrichtung nach einem der Ansprüche 1 bis 8, **dadurch gekennzeichnet, dass** die Beinschale (3) eine zweite Beinschalengleitfläche (20) mit gegebenenfalls schräg zur Fahrtrichtung (8) orientierten oder in Bogenform zur Fahrtrichtung (8) verlaufenden Rillen (19) aufweist, welche zweite Beinschalengleitflächen (20) in einem innen liegenden, seitlichen Bereich, im wesentlichen in einem sich zwischen der verlängerten Steuerboardmittelachse (13) und der ersten Beinschalengleitfläche (7) erstreckenden Bereich angeordnet sind.

10. Schneegleitvorrichtung nach einem der Anspüche 1 bis 9, **dadurch gekennzeichnet, dass** die Schneegleitvorrichtung durch ein Drehen des Steuerboards (1) um eine zur Steuerboardgleitfläche (5) rechtwinklig orientierte zweite Drehachse (21) und durch gegebenenfalls Anlegen einer der zweiten Beinschalengleitflächen (20) der Beinschale (3) an die Schneeoberfläche (25) in eine Kurvenfahrt lenkbar ist, welche Beischale (3) an dem kurvenäußeren Bein (35") angebracht ist.

11. Schneegleitvorrichtung nach einem der Ansprüche 1 bis 10, **dadurch gekennzeichnet, dass** die Schneegleitvorrichtung durch Einpressen der zweiten Beinschalengleitflächen (20) in die Schneeoberfläche (25) bremsbar ist.
